(19) **Europäisches Patentamt**

**European Patent Office**

**Office européen des brevets**

(11) Publication number: **0 375 269 B1**

(12) # EUROPEAN PATENT SPECIFICATION

(45) Date of publication of patent specification: **18.05.94** (51) Int. Cl.5: **G02F 1/136**, G02F 1/133

(21) Application number: **89313058.3**

(22) Date of filing: **13.12.89**

(54) **Liquid crystal display device.**

(30) Priority: **21.12.88 JP 320564/88**

(43) Date of publication of application:
**27.06.90 Bulletin 90/26**

(45) Publication of the grant of the patent:
**18.05.94 Bulletin 94/20**

(84) Designated Contracting States:
**DE FR GB IT**

(56) References cited:
**EP-A- 0 179 922**
**EP-A- 0 271 960**
**JP-A-58 220 185**

**PATENT ABSTRACTS OF JAPAN, vol. 10, no. 41 (P-429)[2098], 18th February 1986; & JP-A-60 188 924**

(73) Proprietor: **International Business Machines Corporation**
**Old Orchard Road**
**Armonk, N.Y. 10504(US)**

(72) Inventor: **Matino, Haruhiro**
**4-9-1-201, Takaidohigashi**
**Suginami-ku**
**Tokyo-to(JP)**
Inventor: **Ueki, Toshihiro**
**3-24-9-208, Naka-machi**
**Machida-shi Tokyo-to(JP)**

(74) Representative: **Atchley, Martin John Waldegrave**
**IBM United Kingdom Limited**
**Intellectual Property Department**
**Hursley Park**
**Winchester Hampshire SO21 2JN (GB)**

## Description

The present invention relates to a liquid crystal device allowing multi-gradation display.

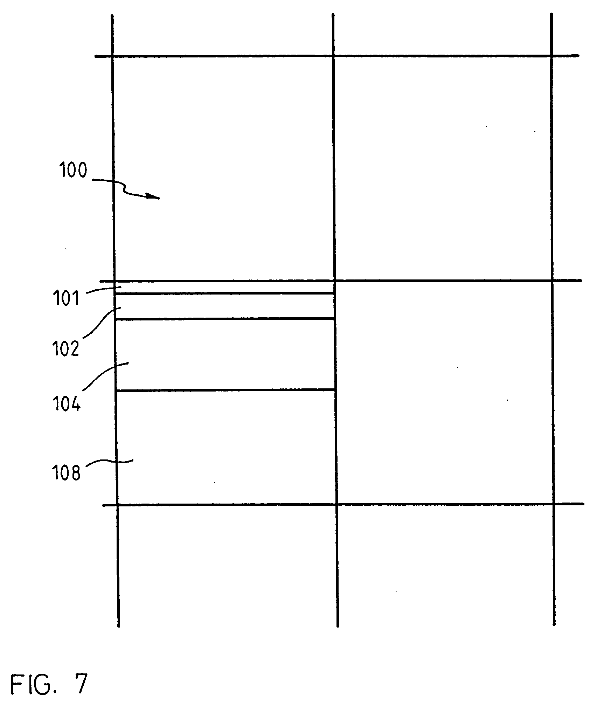

A liquid crystal display device including a plurality of display units is disclosed in Japanese Published Unexamined Patent Application (PUPA) No. 58-220185. In this display device, each display unit 100 is constituted by four pixels (picture elements) 101, 102, 104, 108, (see Figure 7 of the drawings accompanying this Specification) with area ratios of 1 : 2 : 4 : 8, allowing a 16-gradation (gray scale) display by the selection and non-selection of different ones of the four pixels.

The largest pixel 108 has an area eight times that of the smallest pixel 101. There is a limit for decreasing the area of a display unit, and the arrangement described cannot, therefore, be applied to a liquid crystal display device having high resolution and a large area.

Also, since the light transmission coefficient, also called light transmission factor of a liquid crystal used in a display device varies when a voltage applied to the liquid crystal is varied, it is considered theoretically possible to obtain a required gradation by varying the voltage applied to the liquid crystal.

Since change in the light transmission factor of a liquid crystal is very large for a change in a voltage applied to the liquid crystal, it is necessary to provide electronic circuits operating with very high precision in order to obtain many gradations of the light transmission factor of this liquid crystal by adjusting the voltage applied to the liquid crystal. It is very difficult to attain such precision.

The object of the present invention is to provide an improved liquid crystal display device.

The present invention relates to a liquid crystal display device comprising a plurality of display units, n (where n is a positive integer greater than 1) pixels (picture elements) in each of the display units, each of which pixels can be made either to transmit light or to intercept light and the pixels in each display unit being arranged to transmit light in the ratio $2^0 : 2^1 : 2^2 ... 2^{n-1}$, a liquid crystal comprised in to the pixels, and means for applying a voltage to the region of the liquid crystal of each pixel in order to control each pixel either to transmit or to intercept light.

According to the invention the display device is characterised in that each pixel includes a light transmission control factor layer which defines the light transmission coefficient of the pixel so as to provide the ratio of light transmission coefficients of the pixels within each display unit.

With such an arrangement, by selecting for each display unit which pixels shall transmit light and which pixels shall intercept light, each display unit can exhibit a selected one of $2^n$ different gradations of light transmission.

In order that the invention may be more readily understood, an embodiment will now be described with reference to the accompanying drawings, in which:

Fig. 1 is a perspective view showing a liquid crystal display device,

Fig. 2 is a diagram illustrating the variation in the characteristics of one display unit of the liquid crystal display device shown in Fig. 1 when the characteristics of the pixels (picture elements) forming the display unit are varied,

Fig. 3 is a diagram illustrating how different combinations of the light transmission and light interception characteristics of four pixels in the display unit shown in Fig. 2 allow 16 gradations of the light transmission factor of the display unit to be obtained,

Fig. 4 is a graph showing the relation between rotational speed and light transmission factor in the case where a required light transmission factor is obtained by rotative painting,

Fig. 5 is a diagram illustrating the variation in the characteristics of one display unit of another liquid crystal display device when the characteristics of the pixels forming the display unit are varied,

Fig. 6 is a diagram illustrating how different combinations of the light transmission and light interception characteristics of three pixels in the display unit shown in Fig. 5 allow eight gradations of the light transmission factor of the display unit to be obtained; and

Fig. 7 is a diagram illustrating the relation between the display unit and the pixels illustrated in Japanese PUPA No. 58-220185.

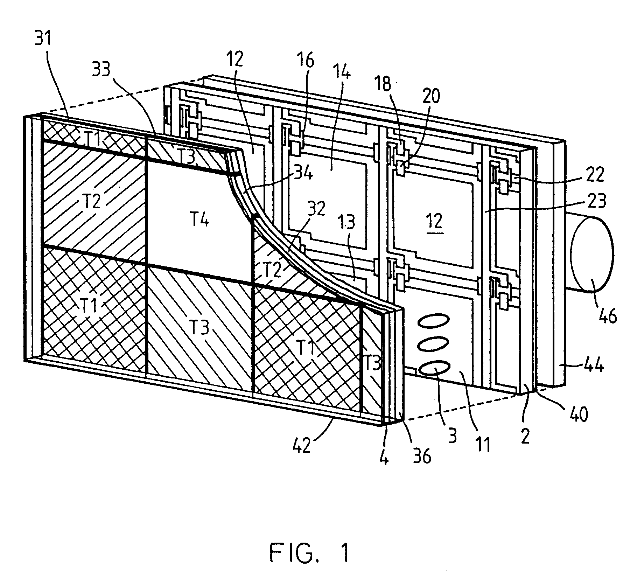

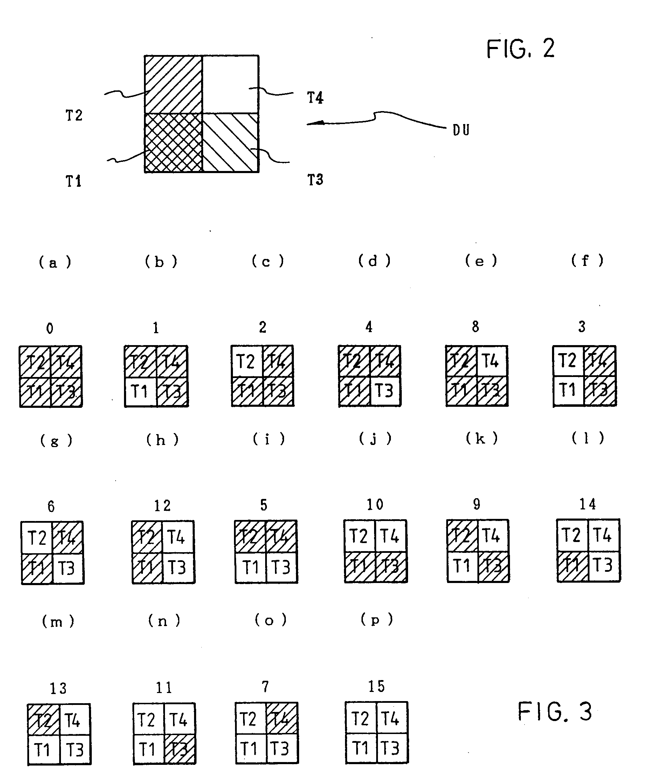

Fig. 1 shows a liquid crystal display device according to the present invention which provides 16 gradations in the light transmission factor of each display unit of the display device. The display device includes a plurality of display units DU and each display unit DU is composed of a set of four pixels (picture elements) T1, T2, T3, and T4 located so as to form a square (see also Fig. 2).

Referring to Fig. 1, the portions of the display device corresponding to the sets of pixels T1, T2, T3, and T4 in Fig. 2 are located on a transparent glass substrate 2, which is called the TFT array substrate. The substrate 2 is provided with sets of transparent pixel electrodes 11, 12, 13, and 14 made of indium tin oxide (hereinafter called ITO), one set of electrodes for each pixel. Each set of pixel electrodes 11, 12, 13, and 14 is connected to a source electrode 20 of a respective one of a plurality of thin-film transistors (hereinafter called a-Si TFT) 16 made of amorphous silicon, each of which controls the application of a voltage to a liquid crystal in the corresponding pixel. Each a-Si TFT 16 is connected at its gate electrode (not shown) to an address conductor 22, and at its drain electrode 18 to a data conductor 23. Also, a liquid crystal orientation film (not shown) is provided extending over the whole of the substrate 2 inside the pixel electrodes 12.

A transparent glass substrate 4, which is called the counter substrate, is located between the sets of pixels and the TFT array substrate 2. Inside the counter substrate 4 (that is, on the side facing towards the TFT array substrate 2), sets of light transmission factor control layers 31, 32, 33, and 34 are provided, one for each pixel. The light transmission factor control layers 31, 32, 33, and 34 of each set are disposed in the regions of the corresponding pixels T1, T2, T3, and T4, respectively, and the ratios between the light transmission factors of the layers in each set are $2^0 : 2^1 : 2^2 : 2^3$, that is, $1 : 2 : 4 : 8$.

Inside the sets of light transmission factor control layers 31, 32, 33, and 34 (that is, on the surfaces facing towards the TFT array substrate), a common electrode 36 is provided all over the whole area of the counter substrate 4. Inside the common electrode 36 a liquid crystal orientation film (not shown) is provided over the whole area of the substrate 4. A liquid crystal 3 is located between the TFT array substrate 2 and the counter substrate 4, or, more correctly, between an orientation film extending over the sets of pixel electrodes 11, 12, 13, and 14 and an orientation film extending over the common electrode 36. At the rear of the TFT array substrate 2 (as viewed in Fig. 1) is provided a back illumination source 46, and outside the TFT array substrate 2 (that is, on the side facing towards the back illumination source 46) is provided a polarizing plate 40. Between the back illumination source 46 and the polarizing plate 40 is a diffusion plate 44 for diffusing light. Also, outside the counter electrode 4 (that is, on the opposite side from the TFT array substrate 2) is provided a polarizing plate 42.

Upon the application of a gate pulse to one of the address conductors 22, and of a data voltage to one of the data conductors 23, the a-Si TFT 16 which is located on both these conductors is placed in the ON state and a voltage is applied to the corresponding portion of the liquid crystal 3.

Assuming that the directions of polarization of the polarizing plates 40 and 42 of the liquid crystal display device shown in Fig. 1 are parallel to each other and the molecular axis of the liquid crystal, as between the portions nearest to the substrate 2 and to the substrate 4 respectively, is twisted by 90_ when no voltage is applied to the liquid crystal 3, then, when a voltage is applied to a region of the liquid crystal 3 by placing the associated a-Si TFT in the ON state as described above, the molecular axes of the portions of that region of the liquid crystal nearest to the substrate 2 and to the substrate 4 respectively are made parallel and light will pass through that region of the liquid crystal.

Alternatively, assuming that the directions of polarization of the polarizing plates 40 and 42 of the liquid crystal display device in Fig. 1 are perpendicular to each other and the molecular axis of the liquid crystal, as between the portions nearest to the substrate 2 and to the substrate 4 respectively, is twisted by 90_ when no voltage has been applied to the liquid crystal 3, then, when no voltage is applied to a region of the liquid crystal, this region of the liquid crystal allows light to pass through it. On the contrary, when a voltage is applied to a region of the liquid crystal by placing the associated a-Si TFT in the ON state as described above, the molecular axes of the portions of that region of the liquid crystal nearest to the substrate 2 and to the substrate 4 respectively are made parallel with each other and that region of the liquid crystal will intercept light. In both cases, the ON-OFF control of the associated a-Si TFT 16 allows the light transmission and light interception through the region of the liquid crystal associated with each pixel to be controlled.

In this way, the application of voltages to the pixels T1, T2, T3, and T4 and the corresponding light transmission and light interception can be independently controlled by the a-Si TFT's 16. Accordingly, sixteen different combinations of light transmission and light interception in the pixels T1, T2, T3, and T4 are available, as shown in Fig. 3, bearing in mind that the light transmission factors of the pixels are in the ratios $1 : 2 : 4 : 8$.

Fig. 3(a) shows a state in which all of the pixels T1, T2, T3, and T4 of a display unit DU intercept light. The amount of light transmission of the whole display unit DU in this case is as follows, as a relative value:

$$\frac{0}{1 + 2 + 4 + 8} = \frac{0}{15}$$

Fig. 3(b) shows a state in which the pixel T1 allows light to pass through it, and the pixels T2, T3, and T4 intercept light. The amount of light transmission of the whole display unit DU in this case is as follows, as a relative value:

$$\frac{1}{1 + 2 + 4 + 8} = \frac{1}{15}$$

Fig. 3(c) shows a state in which the pixel T2 allows light to pass through it and the pixels T1, T3, and T4 intercept light. The amount of light transmission of the whole display unit DU in this case is as follows, as a relative value:

$$\frac{2}{1 + 2 + 4 + 8} = \frac{2}{15}$$

Fig. 3(d) shows a state in which the pixel T3 allows light to pass through it and the pixels T1, T2, and T4 intercept light. An amount of light transmission of the whole display unit DU in this case is as follows, as a relative value:

$$\frac{4}{1 + 2 + 4 + 8} = \frac{4}{15}$$

Fig. 3(e) shows a state in which the pixel T4 allows light to pass through it and the pixels T1, T2, and T3 intercept light. The amount of light transmission of the whole display unit DU in this case is as follows, as a relative value:

$$\frac{8}{1 + 2 + 4 + 8} = \frac{8}{15}$$

Fig. 3(f) shows a state in which the pixels T1 and T2 allow light to pass through them and the pixels T3 and T4 intercept light. The amount of light transmission of the whole display unit DU in this case is as follows, as a relative value:

$$\frac{1 + 2}{1 + 2 + 4 + 8} = \frac{3}{15}$$

Fig. 3(g) shows a state in which the pixels T2 and T3 allow light to pass through them and the pixels T1 and T4 intercept light. The amount of light transmission of the whole display unit DU in this case is as follows, as a relative value:

$$\frac{2 + 4}{1 + 2 + 4 + 8} = \frac{6}{15}$$

Fig. 3(h) shows a state in which the pixels T3 and T4 allow light to pass through them and the pixels T1 and T2 intercept light. The amount of light transmission of the whole display unit DU in this case is as follows, as a relative value:

$$\frac{4 + 8}{1 + 2 + 4 + 8} = \frac{12}{15}$$

Fig. 3(i) shows a state in which the pixels T1 and T3 allow light to pass through them and the pixels T2 and T4 intercept light. The amount of light transmission of the whole display unit DU in this case is as follows, as a relative value:

$$\frac{1 + 4}{1 + 2 + 4 + 8} = \frac{5}{15}$$

Fig 3(j) shows a state in which the pixels T2 and T4 allow light to pass through them and the pixels T1 and T3 intercept light. The amount of light transmission of the whole display unit DU in this case is as follows, as a relative value:

$$\frac{2 + 8}{1 + 2 + 4 + 8} = \frac{10}{15}$$

Fig. 3(k) shows a state in which the pixels T1 and T4 allow light to pass through them and the pixels T2 and T3 intercept light. The amount of light transmission of the whole display unit DU in this case is as follows, as a relative value:

$$\frac{1 + 8}{1 + 2 + 4 + 8} = \frac{9}{15}$$

Fig. 3(l) shows a state in which the pixels T2, T3, and T4 allow light to pass through them and the pixel T1 intercepts light. The amount of light transmission of the whole display unit DU in this case is as follows, as a relative value:

$$\frac{2 + 4 + 8}{1 + 2 + 4 + 8} = \frac{14}{15}$$

Fig. 3(m) shows a state in which the pixels T1, T3, and T4 allow light to pass through them and the pixel T2 intercepts light. The amount of light transmission of the whole display unit DU in this case is as follows, as a relative value:

$$\frac{1 + 4 + 8}{1 + 2 + 4 + 8} = \frac{13}{15}$$

Fig. 3(n) shows a state in which the pixels T1, T2, and T4 allow light to pass through them and the pixel T3 intercepts light. The amount of light transmission of the whole display unit DU in this case is as follows, as a relative value:

$$\frac{1 + 2 + 8}{1 + 2 + 4 + 8} = \frac{11}{15}$$

Fig. 3(o) shows a state in which the pixels T1, T2, and T3 allow light to pass through them and the pixel T4 intercepts light. The amount of light transmission of the whole display unit DU in this case is as follows, as a relative value:

$$\frac{1 + 2 + 4}{1 + 2 + 4 + 8} = \frac{7}{15}$$

Fig. 3(p) shows a state in which all the pixels T1, T2, T3, and T4 allow light to pass through them. The amount of light transmission of the whole display unit DU in this case is as follows, as a relative value:

$$\frac{1 + 2 + 4 + 8}{1 + 2 + 4 + 8} = \frac{15}{15}$$

As apparent from the above description, if the ratios of the light transmission factors of the pixels T1, T2, T3, and T4 are arranged to be 1 : 2 : 4 : 8, different combinations of the light transmission and interception of the pixels T1, T2, T3, and T4 allow relative amounts of light transmissions of 0/15, 1/15, 2/15, 3/15, 4/15, 5/15, 6/15, 7/15, 8/15, 9/15, 10/15, 11/15, 12/15, 13/15, 14/15, and 15/15 to be obtained, which allows 16 gradations to be attained.

In order to make the ratios of the light transmission factors of the pixels T1, T2, T3, and T4 to be 1 : 2 : 4 : 8, the light transmission factors of the light transmission factor control layers 31, 32, 33, and 34 need only to be, for example, 12.5%, 25.0%, 50.0%, and 100%. This can be realized, for example, by controlling the amount of dispersion of carbon black into an acrylic resin which is used to form each control layer. For example, a standard solution (hereinafter called a STD solution), produced by adding a photopolymerization initiator and carbon black to acrylic resin and performing viscosity adjustment and dilution thereof, is rotatively applied with painting at speeds of 520 RPM and 900 RPM, allowing the light transmission factors of 12.5% and 25.0% respectively to be obtained. When the STD solution is diluted in such a manner that the carbon black component amounting to 30% and is rotated at a speed of 650 RPM, a light transmission factor of 50.0% can be obtained.

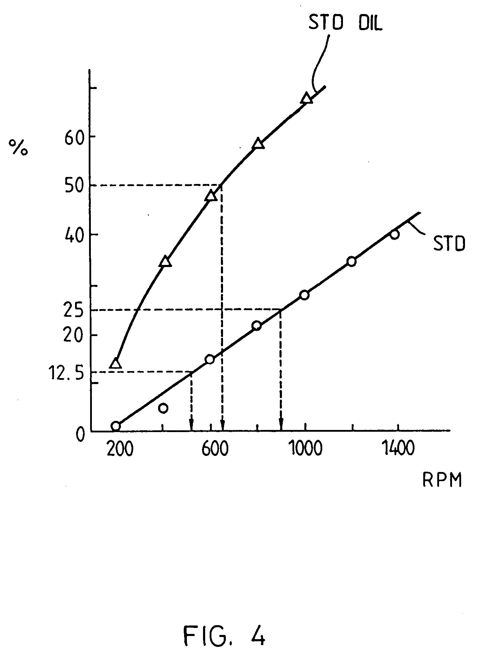

Fig. 4 shows the relationship between the revolutions per minute (RPM) and the light transmission factor (%) of a control layer in the case where a required light transmission factor is obtained by rotative painting using either a standard solution (STD) or a diluted standard solution (STDDIL). As described above, if resin components are made photosensitive by adding a photo polymerization initiator, patterns can be obtained by development only. Resin components having no photosensitivity are painted thereon with a photoresist material, applied with patterning by use of a conventional technique, and then can be processed with etching.

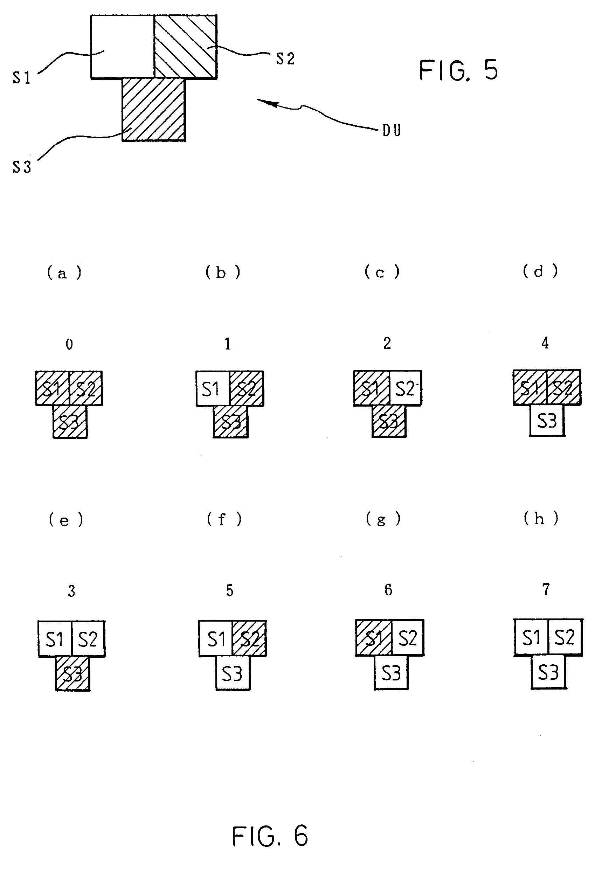

Fig. 5 shows an example of an arrangement of pixels in the case where a display unit DU is composed of three adjacent pixels. Three square-shaped pixels S1, S2, and S3 are located respectively at the apexes of an inverted regular triangle to form a single display unit, and the ratios of the light transmission factors of the pixels are:

$2^0 : 2^1 : 2^2$

that is,

1 : 2 : 4.

In the case of this arrangement of pixels, eight combinations of the light transmission and light interception of the pixels S1, S2, and S3 are available, as shown in Fig. 6.

Fig. 6(a) shows a state in which all of the pixels S1, S2, and S3 intercept light. The amount of light transmission of the display unit DU in this case is as follows, as a relative value:

$$\frac{0}{1 + 2 + 4} = \frac{0}{7}$$

Fig. 6(b) shows a state in which the pixel S1 allows light to pass through it and the pixels S2 and S3 intercept light. The amount of light transmission of the display unit DU in this case is as follows, as a relative value:

$$\frac{1}{1 + 2 + 4} = \frac{1}{7}$$

Fig. 6(c) shows a state in which the pixel S2 allows light to pass through it and the pixels S1 and S3 intercept light. The amount of light transmission of the display unit DU in this case is as follows, as a relative value:

$$\frac{2}{1 + 2 + 4} = \frac{2}{7}$$

Fig. 6(d) shows a state in which the pixel S3 alloms light to pass through it and the pixels S1 and S2 intercept light. The amount of light transmission of the display unit DU in this case is as follows, as a relative value:

$$\frac{4}{1 + 2 + 4} = \frac{4}{7}$$

Fig. 6(e) shows a state in which the pixels S1 and S2 allow light to pass through them and the pixel S3 intercepts light. The amount of light transmission of the display unit DU in this case is as follows, as a relative value:

$$\frac{1 + 2}{1 + 2 + 4} = \frac{3}{7}$$

Fig. 6(f) shows a state in which the pixels S1 and S3 allow light to pass through them and the pixel S2 intercepts light. The amount of light transmission of the display unit DU in this case is as follows, as a relative value:

$$\frac{1 + 4}{1 + 2 + 4} = \frac{5}{7}$$

Fig. 6(g) shows a state in which the pixels S2 and S3 allow light to pass through them and the pixel S1 intercepts light. The amount of light transmission of the display unit DU in this case is as follows, as

a relative value:

$$\frac{2 + 4}{1 + 2 + 4} = \frac{6}{7}$$

Fig. 6(h) shows a state in which all the pixels S1, S2, and S3 allow light to pass through them. The amount of light transmission of the display unit DU in this case is as follows, as a relative value:

$$\frac{1 + 2 + 4}{1 + 2 + 4} = \frac{7}{7}$$

In this way, if three pixels form one display unit, and the ratios of the light transmission factors of the three pixels are made to be 1 : 2 : 4, the combinations of the light transmission and interception of the three pixels allows relative amounts of the light transmission of 0/7, 1/7, 2/7, 3/7, 4/7, 5/7, 6/7 and 7/7 to be obtained, which allows eight gradations to be attained.

The above-mentioned embodiments are those in the cases where one display unit DU is formed from either four or three pixels. The present invention is not limited by these numbers of pixels, and can be applied to the case where one display unit DU is composed of n (n is a positive integer) pixels. Since the light transmission characteristic of each pixel in a display unit cannot be any value except one of the two values of ON (light transmission) and OFF (light interception), when the ratio of the light transmission factors of these pixels is decided in accordance with two exponential functions ($2^x$ : $x$ = 0, 1, 2, ...) the multi-gradations become most linear. Accordingly, the rations of light transmission factors of n pixels need only to be $2^0 : 2^1 : 2^2 \ldots 2^{n-1}$.

In the above-mentioned embodiments, although a TFT is employed as a switching element which controls the application of voltages to liquid crystals in a pixel domain, the present invention is not limited by this. For example, MIM (metal-insulator-metal) could alternatively be employed.

Also, the present invention can be applied not only to the above-mentioned so-called active matrix type liquid crystal, but also to a simple matrix type liquid crystal. The reason is that in a simple matrix type, the application of voltages to pixels in the region of a liquid crystal where an X electrode and a Y electrode intersect is selected to control light transmission and interception for the liquid crystal in the pixel region concerned.

Also, in the above-mentioned embodiment, a light transmission factor control layer is provided on the side of the counter electrode 4. It may alternatively be provided on the pixel electrodes on the substrate on the side of the switching elements such as TFT.

The present invention allows a multi-gradation display without the necessity of enlarging an area in one display unit, or of finely adjusting voltages applied to the liquid crystals in each pixel.

## Claims

1. A liquid crystal display device comprising
   a plurality of display units (DU),
   n pixels, i.e. picture elements (T1, T2, T3, T4 : S1, S2, S3) in each of said display units, where n is a positive integer greater than 1, each of which pixels can be made either to transmit light or to intercept light and the pixels in each display unit being arranged to transmit light in the ratio $2^0 : 2^1 : 2^2 ... 2^{n-1}$,
   a liquid crystal (3) comprised in said pixels, and
   means (11, 12, 13, 14) for applying a voltage to the region of the liquid crystal of each pixel in order to control each pixel either to transmit or to intercept light,
   characterised in that each pixel includes a light transmission control factor layer (31, 32, 33, 34) which defines the light transmission coefficient of said pixel such that the ratio of light transmission coefficients of the pixels within each display unit corresponds to the ratio defined above.

2. A display device as claimed in Claim 1 characterised in that each display unit comprises four pixels.

## Patentansprüche

1. Eine Flüssigkristall-Anzeigevorrichtung, die folgendes aufweist:
   eine Vielzahl von Anzeigeeinheiten (DU),
   n Pixel, d.h. Bildelemente (T1, T2, T3, T4 : S1, S2, S3) in jeder der genannten Anzeigeeinheiten, wobei n eine positive Ganzzahl größer als 1 ist, und wobei jedes dieser Pixel Licht entweder durchlassen oder auffangen kann und die Pixel in jeder Anzeigeeinheit so angeordnet sind, daß sie Licht im Verhältnis $2^0 : 2^1 : 2^2 ... 2^{n-1}$ durchlassen,
   einen in den genannten Pixeln enthaltenen Flüssigkristall (3) und
   Mittel (11, 12, 13, 14) zum Anlegen einer Spannung an die Zone des Flüssigkristalls jedes Pixels, um jedes Pixel so anzusteuern, daß es Licht entweder durchläßt oder auffängt, dadurch gekennzeichnet, daß jedes Pixel eine Lichtübertragungs-Steuerfaktor-Schicht (31, 32, 33, 34) enthält, welche den Lichtübertragungskoeffizienten des genannten Pixels bestimmt, so daß das Verhältnis der Lichtübertragungskoeffizienten der Pixel innerhalb jeder Anzeigeeinheit dem oben festgelegten Verhältnis entspricht.

2. Eine Anzeigevorrichtung gemäß Anspruch 1, dadurch gekennzeichnet, daß jede Anzeigeeinheit vier Pixel umfaßt.

## Revendications

1. Un dispositif d'affichage à cristal liquide comprenant:
   - une pluralité d'unités d'affichage (DU),
   - n pixels, c'est à dire n éléments d'image (T1, T2, T3, T4 : S1, S2, S3) dans chacune desdites unités d'affichage, où n est un nombre entier positif supérieur à 1, chacun de ces pixels pouvant soit transmettre la lumière, soit intercepter la lumière et les pixels dans chaque unité d'affichage étant agencés de façon à transmettre la lumière dans le rapport $2^0 : 2^1 : 2^2 ... 2^{n-1}$,
   - un cristal liquide (3) compris dans lesdits pixels, et
   - des moyens (11, 12, 13, 14) pour appliquer une tension à la région du cristal liquide de chaque pixel afin de contrôler chaque pixel soit pour transmettre, soit pour intercepter la lumière,
   caractérisé en ce que chaque pixel comprend une couche de contrôle de transmission de la lumière (31, 32, 33, 34) qui définit le coefficient de transmission de la lumière dudit pixel de façon que le rapport des coefficients de transmission de lumière des pixels dans chaque unité d'affichage, corresponde au rapport défini ci dessus.

2. Un dispositif d'affichage tel que revendiqué par la revendication 1 caractérisé en ce que chaque unité d'affichage comprend quatre pixels.

FIG. 1

FIG. 2

T2

T1

T4

T3

DU

(a)  (b)  (c)  (d)  (e)  (f)

0  1  2  4  8  3

| T2 | T4 |
| T1 | T3 |

(g)  (h)  (i)  (j)  (k)  (l)

6  12  5  10  9  14

(m)  (n)  (o)  (p)

13  11  7  15

FIG. 3

FIG. 4

FIG. 5

( a )　　　　( b )　　　　( c )　　　　( d )

0　　　　　1　　　　　2　　　　　4

( e )　　　　( f )　　　　( g )　　　　( h )

3　　　　　5　　　　　6　　　　　7

FIG. 6

100

101

102

104

108

FIG. 7